# EUROPEAN PATENT SPECIFICATION

(11) **EP 2 749 767 B1**
(45) Date of publication and mention of the grant of the patent: **19.04.2017**
(21) Application number: 13198253.0
(22) Date of filing: 19.12.2013
(51) Int. Cl.: F04B 1/04

(54) **Radial piston hydraulic machine and wind turbine generator**
Radialkolbenhydraulikmaschine und Windturbinengenerator
Machine hydraulique à pistons radiaux et générateur de turbine éolienne

(30) Priority: 28.12.2012 JP 2012288350; 28.03.2013 JP 2013069673
(43) Date of publication of application: 02.07.2014
(73) Proprietor: MITSUBISHI HEAVY INDUSTRIES, LTD., Tokyo 108-8215 (JP)
(72) Inventor: Osaka, Hiromi, TOKYO, 108-8215 (JP); Takeda, Katsuhiko, TOKYO, 108-8215 (JP); Uehara, Osamu, TOKYO, 108-8215 (JP); Ochiai, Hiroyasu, TOKYO, 108-8215 (JP); Yuge, Atsushi, TOKYO, 108-8215 (JP); Takehana, Isamu, TOKYO, 108-8215 (JP); Sasaki, Masashi, TOKYO, 108-8215 (JP)
(74) Representative: Intès, Didier Gérard André

(56) References cited:
- WO-A1-00/53925
- WO-A2-2011/104544
- CH-A5- 598 488
- DE-A1- 19 810 372
- DE-A1-102008 001 871
- DE-A1-102010 032 057
- DE-A1-102010 038 553
- FR-A1- 2 582 058

## Description

### [Technical Field]

The present invention relates to a radial piston hydraulic machine and a wind turbine generator equipped with the same.

### BACKGROUND ART

A radial piston hydraulic machine having a plurality of pistons radially arranged has been known.

For instance, Patent Document 1 discloses a radial piston hydraulic pump for use in a power transmission device. This hydraulic pump comprises an outer race having a cam surface on an inner circumferential surface and an inner race having a plurality of cylinders radially arranged to face the outer race. A plurality of cylinders of the inner race is configured to be guided by a plurality of pistons, respectively. Further, to each of the pistons, a ball for contact with the cam surface is mounted.

Further, disclosed in Patent Document 2 is a radial piston hydraulic machine serving as a drive train for a wind turbine generator. The radial piston hydraulic machine described in Patent Document 2 comprises pistons which reciprocate in cylinders, rollers mounted to the pistons and a cam having a cam surface to contact the rollers.

In this type of radial piston hydraulic machine, the roller is normally attached to the cam surface to roll on the cam surface. For instance, in Patent Document 3 and Patent Document 4, disclosed is the configuration in which a depression is formed in the piston along the roller surface and the roller is rollably accommodated in the depression. Further, the motion mode is convertible between the reciprocating motion of the piston reciprocating along the cylinder with the roller rolling on the cam surface and the rotational motion of the cam. Patent Document 5 discloses a further example of radial piston hydraulic machine.

### [Citation List]

### [Patent Document]

[Patent Document 1]
   JP 2010-19192 A
[Patent Document 2]
   US 2010/0040470 A
[Patent Document 3]
   JP 2009-531596 A
[Patent Document 4]
   US 6834575 B
[Patent Document 5]
   FR2585058

### SUMMARY

### [Technical Problem]

Displacement of the roller rolling on the cam surface tends to occur due to various factors such as a side force from the cam. For instance, when the roller has a low cylindricity, it causes a circumferential speed difference across the roller and the roller rotates with the piston about the axis of the cylinder. This rotation of the roller about the axis of the cylinder is called skewing. When a force is loaded on the roller from the cam surface in the state where the roller is skewing, the roller skids sideway in the axial direction (the width direction of the roller), thereby causing displacement of the roller in the axial direction.

For smooth operation of the radial piston hydraulic machine, it is desirable to maintain the roller in the center in the width direction of the cam surface. Therefore, from the view point of preventing the axial displacement of the roller, it may be configured such that a pair of side panels is provided on both sides of the cam surface to regulate the axial displacement of the roller within the pair of side panels. However, this generates an issue of increased weight of the radial piston hydraulic machine. Further, in the case where the axial displacement of the roller is regulated by the side panels alone, the roller is not regulated until it contacts the side panels and thus, it is difficult to maintain the roller in the center of the cam surface. Furthermore, contact of the roller against side panels causes wear, which results in deterioration of the parts and also increase in energy loss.

In this respect, Patent Document 2 or Patent Document 3 does not describe a measure to control the axial displacement of the roller and hold the roller at an appropriate position on the cam surface. Meanwhile, Patent Document 4 discloses the configuration in which a recessed bearing bush provided in a piston extends from an outer circumferential surface of the roller to a position on a peripheral edge of each end surface of the roller. The axial displacement of the roller is prevented by contacting this roller to a portion of the bearing bush which extends to the peripheral edge of the roller end surface. However, the circumferential speed at the peripheral edge of the roller end surface is high and thus, wear caused by contact between the roller end surface and the portion of the bearing bush is significant. Therefore, various issues caused by the wear arise.

An object of at least one embodiment of the present invention is to provide a radial piston hydraulic machine and a wind turbine generator, which is capable of regulating the axial displacement of the roller and maintaining the roller at an appropriate position on the cam surface.

### [Solution to Problem]

The invention is defined by the appended claims. A radial piston hydraulic machine according to at least one embodiment of the present invention, comprises: pistons arranged along a radial direction of the hydraulic machine; rollers provided rotatably for the pistons, respectively; a cylinder block comprising cylinders for guiding the respective pistons reciprocably along the radial direction; and a cam configured to contact the rollers, wherein each of the pistons includes a roller displacement regulating part which is configured to contact a region of at least one end surface of the corresponding roller except a peripheral edge portion so as to regulate an axial displacement of the corresponding roller.

According to the above radial piston hydraulic machine, as the roller displacement regulating part for regulating an axial displacement of the roller is provided in each of the pistons, it is possible to hold the roller at an appropriate position on the cam surface, for instance, at a center in the width direction of the cam surface,
Further, compared to the case where a side panel for regulating the axial displacement of the roller is provided on each side of the cam surface or where a bearing bush slidably contacting the roller is provided extending to the peripheral edge portions of the end surfaces of the roller, it is possible to suppress frictional wear of the roller and the roller displacement regulating part. Specifically, as the side panels provided on both sides of the cam surface rotate with the cam, which causes
relative motion between the roller and the side panels, there is friction at the roller in the state where the roller is in contact with the side panel. On the other hand, the above radial piston hydraulic machine is configured such that the roller displacement regulating part is provided on the piston and thus, the rotation of the cam does not cause relative motion between the roller and the roller displacement regulating part in the rotational direction of the cam. Therefore, compared to the case where the side panels for regulating the axial displacement of the roller is provided on each side of the cam surface, it is possible to suppress friction of the roller and the roller displacement regulating part. Further, the roller displacement regulating part is configured to contact a region of at least one end surface of each of the rollers, exclusive of the peripheral edge portion. As a result, it is possible to avoid contact of the roller displacement regulating part with the peripheral edge portion whose circumferential speed is high and also possible to reduce frictional wear of the roller and the roller displacement regulating part. Therefore, compared to the case where the bearing bush slidably contacting the roller extends to the peripheral edge portion of the end surfaces of the roller, it is possible to suppress frictional wear of the roller and the roller displacement regulating part.

Furthermore, as the roller displacement regulating part is provided on each of the pistons, weight increase of the radial piston hydraulic machine is suppressed compared to the case where the side panels are provided on both sides of the cam surface.

In some embodiments, the roller displacement regulating part includes a pair of arms extending from each of the pistons to end surfaces of each of the rollers, and a pair of contact parts which is provided in the pair of arms, respectively, and at least one of the pair of contact parts is configured to contact a rotation center of the roller on the end surface of the roller so as to regulate the axial displacement of the roller.

As the roller displacement regulating part includes a pair of arms and a pair of contact parts, and at least one of the pair of contact parts is configured to contact the section of the end surface of the roller where the circumferential speed is zero (the rotation center of the roller), it is possible to suppress frictional wear of the roller and the roller displacement regulating part caused by the rotational motion of the roller.

In one embodiment, the contact part is a ball which is provided at a tip portion of the arm and configured to contact the end surface of the roller such that the roller is allowed to roll.

By arranging the ball as the contact part between the tip portion of the arm and the end surface of the roller (the rotation center of the roller) in the above manner, the ball rolls in response to rotation of the roller. Herein, it is mainly rolling friction that takes place between the roller and the roller displacement regulating part. The rolling friction is smaller than a sliding friction, and thus it is possible to further reduce frictional wear of the roller and the roller displacement regulating part (the tip portion of the arm and the ball) caused by the rotational movement of the roller.

In another embodiment, a protrusion is provided on the end surface of the roller to contact the contact part which is a tip portion of the arm.

As a result, it is possible to simplify the structure of the section where the roller and the roller displacement regulating part contact with each other, thereby achieving reduction of the production cost.

In yet another embodiment, the radial piston hydraulic machine is configured such that the contact part is constituted by a protrusion provided on a tip portion of the arm to contact the end surface of the roller.

As a result, it is possible to simplify the structure of the section where the roller and the roller displacement regulating part contact with each other, thereby achieving reduction of the production cost.

In some embodiments, the roller includes a receiving part arranged at a rotation center of the roller to contact the contact part, an end surface to which the receiving part is attached, and a roller body having an outer peripheral surface contacting the cam, the receiving part being made of a material which has a lower frictional resistance than the end surface.

As the receiving part for contacting the contact part of the roller displacement regulating part is provided at the rotation center of the roller and the receiving part is made of a material which has a lower frictional resistance than the end surface of the roller, it is possible to suppress frictional wear of the receiving part and the contact part caused by rotational motion of the roller.

In some embodiments, the arm comprises a first section attached to an outer peripheral surface of the piston and extending along an axial direction of the roller and a second section connected to the first section via a bending portion and extending in a radial direction of the roller.

As a result, it is possible to attach the arm extending toward the end surface of the roller to the piston appropriately.

In one embodiment, the first section is fastened by a bolt to the outer peripheral surface of the piston.

As a result, the roller displacement regulating part can be configured to be detachable at low cost, and to be easily replaceable.

In some embodiment, the cylinder block comprises: cylinder sleeves having the cylinders, respectively; and a cylinder block body having sleeve holes where the cylinder sleeves are inserted, respectively, and
a notch is provided in each of the cylinder sleeves so as to prevent interference with the roller displacement regulating part when each of the pistons reciprocates.

In the case where the roller displacement regulating part includes a pair of supports contacting the rotation center of the roller, as the pair of supports is provided on the piston which reciprocates in the cylinder sleeve, the roller displacement regulating part possibly interferes with the cylinder sleeve. In view of this, in this embodiment, the notch is provided in each of the cylinder sleeves so as to prevent the pair of supports from inhibiting the reciprocating motion of the piston and also enable smooth movement of the piston.

In some embodiments, the roller displacement regulating part includes at least one projection engageable with at least one depression formed on an outer peripheral surface of each of the rollers along a circumferential direction of said each of the rollers.

As a result, the roller rotates in the state where at least one projection provided on the piston engages with at least one depression provided on the roller and thus, a relative position of the roller relative to the piston can be held constant. Herein, as the position of the roller in the axial direction is constant relative to the cylinder, the axial position of the roller can be held constant relative to the piston. As a result, the axial position of the roller can be held constant relative to the piston and thus, the roller can be held at an appropriate position relative to the cam surface.

In some embodiment, each of the pistons includes an inner flow path for introducing the operating oil from each of hydraulic chambers respectively formed by the pistons and the cylinders to each of contact parts respectively disposed between the pistons and the rollers, and the inner flow path extends to an engagement part between the at least one depression and the at least one projection.

As a result, as the inner flow path for introducing the operating oil to the contact part between the piston and the roller extends to an engagement part between the depression formed in the roller and the projection formed on the piston, it is possible to attain lubricity at the engagement part and also reduce the frictional wear of the projection and the depression caused by rotation of the roller.

In some embodiments, each of the pistons comprises an inner flow path and at least one oil groove, the inner flow path being configured to lead operating oil from each of hydraulic chambers respectively formed by the pistons and the cylinders to each of engagement surfaces of the pistons and the rollers, the at least one oil groove being formed to communicate with the inner flow path and to face said each of the engagement surfaces.

In the above embodiments, the operating oil in the hydraulic chamber is supplied via the inner flow path provided in the piston to the oil groove formed to communicate with the inner flow path and to face the engagement surface between the piston and the roller. As a result, the operating can be supplied effectively to the engagement surfaces between the piston and the roller as the lubricating oil, and thus a hydrostatic oil film can be formed by oil pressure in a stable manner.

In some embodiments, each of the end surfaces of the roller has a crowned peripheral edge portion.

As a result, it is possible to suppress increase of contact pressure at the peripheral edge portion belonging to the end surfaces of the roller when the roller contacts the cam surface.

In some embodiments, each of the rollers is disposed so that a rotation center of said each of the rollers is positioned downstream relative to a center axis of each of the cylinder sleeves in a rotational direction of the cam.

When the roller is skewed, the gravity center of the roller is displaced toward the downstream side from the center axis of the cylinder (the rotation center of the piston and the roller) in the rotation direction of the cam. Thus, a moment around the axis of the cylinder is generated by the pressing pressure from the cam, thereby correcting the skewing of the roller. Therefore, the roller can be returned to an appropriate attitude with respect to the rotation direction of the cam. In the present description, skewing refers to rotation of the roller about the axis of the cylinder caused by rotation of the piston about the axis of the cylinder.

A wind turbine generator according to at least one embodiment of the present invention comprises:
at least one blade;
a hub on which the at least one blade is mounted;
a hydraulic pump configured to be driven by rotation of the hub;
a hydraulic motor configured to be driven by pressurized oil generated by the hydraulic pump; and
a generator configured to be driven by the hydraulic motor,
wherein at least one of the hydraulic pump or the hydraulic motor is constituted by a radial piston hydraulic machine,
wherein the radial piston hydraulic machine comprises: pistons arranged along a radial direction of the hydraulic machine; rollers provided rotatably for the pistons, respectively; a cylinder block comprising cylinders for guiding the pistons reciprocatably along the radial direction, respectively; and a cam configured to contact the rollers, and
wherein each of the pistons includes a roller displacement regulating part which is configured to contact a region of at least one end surface of the corresponding roller except a peripheral edge portion so as to regulate an axial displacement of the corresponding roller.

According to the above wind turbine generator, as the roller displacement regulating part for regulating an axial displacement of the roller is provided in each of the pistons, it is possible to hold the roller at an appropriate position on the cam surface, for instance, at a center in the width direction of the cam surface,

Further, as the roller displacement regulating part is provided on the piston, the rotation of the cam does not cause relative motion between the roller and the roller displacement regulating part in the rotational direction of the cam. Therefore, it is possible to suppress frictional wear of the roller and the roller displacement regulating part. Furthermore, the roller displacement regulating part is configured to contact a region of at least one end surface of each of the rollers, exclusive of the peripheral edge portion. As a result, it is possible to avoid contact of the roller displacement regulating part with the peripheral edge portion whose circumferential speed is high and also possible to reduce frictional wear of the roller and the roller displacement regulating part. Therefore, compared to the case where the bearing bush slidably contacting the roller extends to the peripheral edge portion of the end surfaces of the roller, it is possible to suppress frictional wear of the roller and the roller displacement regulating part.

Moreover, as the roller displacement regulating part is provided on each of the pistons, weight increase of the radial piston hydraulic machine is suppressed compared to the case where the side panels are provided on both sides of the cam surface.

### [Advantageous Effects]

According to at least one embodiment of the present invention, it is possible to maintain the roller at an appropriate position on the cam surface by means of the roller displacement regulating part for regulating the axial displacement of the roller, and to suppress frictional wear of the roller and the roller displacement regulating part by providing the roller displacement regulating part on the piston. Further, the roller displacement regulating part is configured to contact a region of at least one end surface of each of the rollers, exclusive of the peripheral edge portion. As a result, it is possible to avoid contact of the roller displacement regulating part with the peripheral edge portion whose circumferential speed is high and also possible to reduce frictional wear of the roller and the roller displacement regulating part. Furthermore, the roller displacement regulating part is provided in each of the pistons. Thus, it is possible to suppress weight increase of the radial piston hydraulic machine, compared to the case where the side panels are provided on both sides of the cam surface.

### BRIEF DESCRIPTION OF DRAWINGS

[FIG.1] FIG.1 is an illustration of a wind turbine generator according to one embodiment.
[FIG.2] FIG.2 is a schematic cross-sectional view of a radial piston hydraulic machine according to one embodiment.
[FIG.3] FIG.3 is an oblique view of a cylinder block according to one embodiment.
[FIG.4] FIG.4 is a cross-sectional view of the cylinder block of FIG.3 taken along line A-A of FIG.3.
[FIG.5] FIG.5 is a cross-sectional view of the cylinder block of FIG.3 taken along a radial direction of the cylinder block.
[FIG.6A] FIG.6A is an oblique view of the cylinder block according to one embodiment.
[FIG.6B] FIG.6B is a plan view of the cylinder block of FIG.6A.
[FIG.7A] FIG.7A is an oblique view of a cylinder block according to another embodiment.
[FIG.7B] FIG.7B is a plan view of the cylinder block of FIG.7A.
[FIG.8] FIG.8 is a front view of a piston and a roller according to another embodiment.
[FIG.9] FIG.9 is a side view of the piston and the roller according to another embodiment.
[FIG.10] FIG.10 is a front view of the piston and the roller according to another embodiment.
[FIG.11] FIG.11 is a schematic illustration of an engagement surface of the piston with respect to the roller.
[FIG.12] FIG.12 is a cross-sectional view of the cylinder block according to another embodiment taken along the axial direction.
[FIG.13] FIG.13 is a cross-sectional view of the cylinder block according to another embodiment taken along the radial direction of the cylinder block.
[FIG.14] FIG.14 is an explanatory view of a configuration of the roller according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

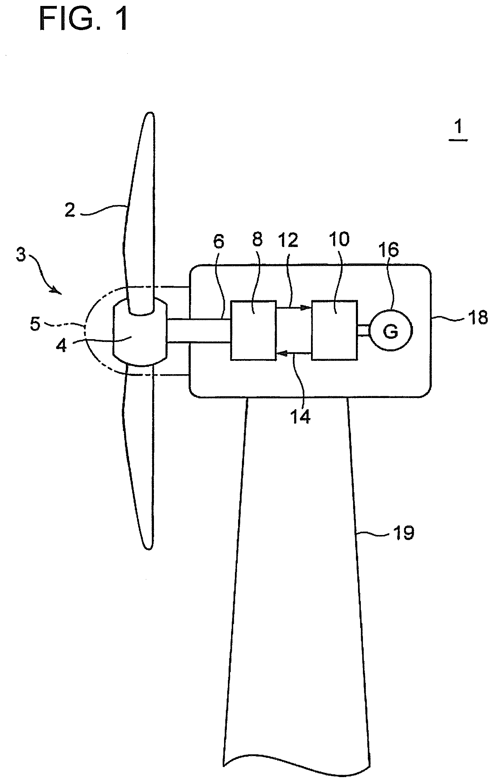

FIG.1 is an illustration of a wind turbine generator according to one embodiment.

As illustrated in the drawing, a wind turbine generator 1 is provided with a rotor 3 formed by at least one blade 2 and a hub 4. The hub 4 may be covered by a hub cover 5. In one embodiment, a hydraulic pump 8 is connected to the rotor 3 via a rotation shaft 6. To the hydraulic pump 8, a hydraulic motor 10 is connected via a high pressure oil line 12 and a low pressure oil line 14. More specifically, an outlet of the hydraulic pump 8 is connected to an inlet of the hydraulic motor 10 via the high pressure oil line 12 while an inlet of the hydraulic pump 8 is connected to an outlet of the hydraulic motor 10 via the low pressure oil line 14. The hydraulic pump 8 is driven by the rotation shaft 6 to pressurize operating oil, thereby generating high pressure operating oil (pressurized oil). The pressurized oil generated by the hydraulic pump 8 is supplied to the hydraulic motor 10 via the high pressure oil line 12 to drive the hydraulic motor 10. The operating oil having performed work in the hydraulic motor 10 becomes low pressure operating oil. The low pressure operating oil is returned to the hydraulic pump 8 via the low pressure oil line 14 provided between the outlet of the hydraulic motor 10 and the inlet of the hydraulic pump 8.

A generator 16 is connected to the hydraulic motor 10. In one embodiment, the generator 16 is a synchronous generator which is connected to a grid and configured to be driven by the hydraulic motor 10.

Further, the rotation shaft 6 is at least in part covered by a nacelle 18 installed on a tower 19. In one embodiment, the hydraulic pump 8, the hydraulic motor 10 and the generator 16 are placed in the nacelle 18.

In some embodiments, at least one of the hydraulic pump 8 or the hydraulic motor 10 is a radial piston hydraulic machine which is described below.

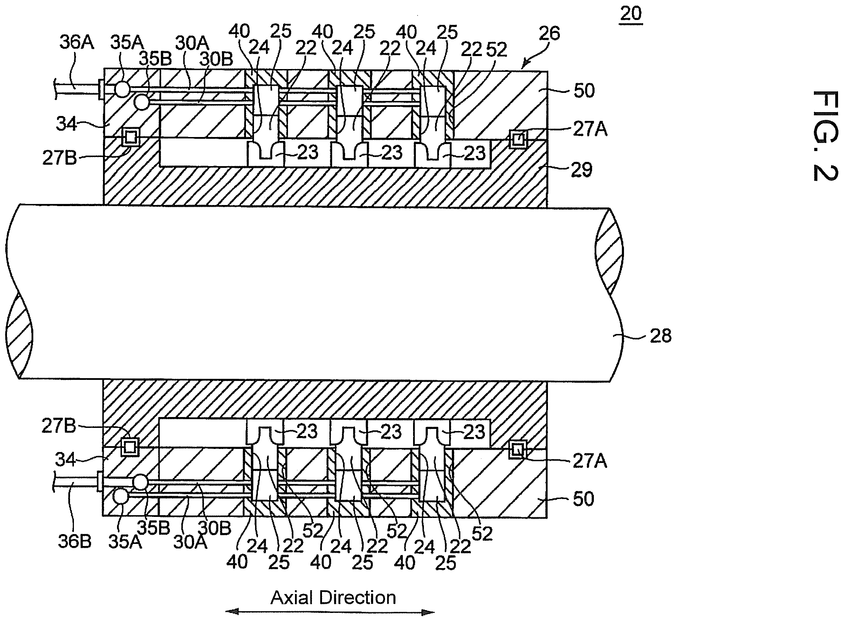

FIG.2 is a cross-sectional view of the radial piston hydraulic machine according to an embodiment.

In the embodiment illustrated in FIG.2, a hydraulic machine 202 comprises a plurality of pistons 22 each disposed along the radial direction of the hydraulic machine 20, and a cylinder block 26 comprising a plurality of cylinders 24 slidably holding the plurality of pistons 22, respectively. Each of the pistons 22 is slidably provided in each of the cylinders 24. Each of the pistons 24 is guided by each of the cylinders 22 to reciprocate along the radial direction of the hydraulic machine 20. The reciprocating motion of the piston 22 which accompanies cyclic volume change of the hydraulic chamber 25 is convertible into a rotational motion of a cam 29, and vice versa.

For instance, in the case where the hydraulic machine 20 is a hydraulic pump, the rotational motion of the cam 29 rotating with the rotation shaft 28 of the hydraulic machine 20 is converted into reciprocating motion of the piston 22, and the volume of the hydraulic chamber 25 changes cyclically to generate high pressure operating oil (pressurized oil) in the hydraulic chamber 25. In contrast, in the case where the hydraulic machine 20 is a hydraulic motor, the reciprocating motion of the piston 22 occurs in response to feeding of the pressurized oil into the hydraulic chamber 25, and then the reciprocating motion is converted into the rotational motion of the cam 29. As a result, the rotation shaft 28 of the hydraulic machine 20 rotates with the cam 29.

In this manner, with use of the cam 29, the energy is converted between rotational energy (mechanical energy) of the rotation shaft 28 of the hydraulic machine 20 and fluid energy of the operating oil, and hence the hydraulic machine 20 is capable of serving as the hydraulic pump or the hydraulic motor as desired.

In one embodiment, the cam 29 is configured to rotate with the rotation shaft 28 as illustrated in FIG.2. This cam 29 is a ring cam having a cam surface that contacts the roller 23 provided at the piston 22 and having a wave-like cross-sectional shape. In this case, at least one bearing 27A may be provided between the cam 29 and the cylinder block 26 to generate the rotational force of the cam 29 relative to the roller 23.

In the cylinder block 26, at least one inner oil path 30 (30A, 30B) communicating with a plurality of the hydraulic chambers 25 is formed.

In one embodiment, a plurality of the inner oil paths 30 (30A, 30B) is provided along the axial direction of the hydraulic machine 20, and annular collecting paths 35 (35A, 35B) are formed in an annular end plate 34 to communicate with the inner oil paths 30 (30A, 30B), respectively. The endplate 34 is an annular plate member attached to an end of the cylinder block 26. In one embodiment, a bearing 27B is provided between the endplate 34 and the cam 29, and the endplate 34 can be maintained in a stationary state without being affected by the rotational motion of the cam 29. The annular collecting paths 35 (35A, 35B) inside the endplate 34 are, respectively, connected to outer pipes 36 (36A, 36B). In this manner, each of the hydraulic chambers 25 is configured to communicate with the outer pipes 36 (36A, 36B) via the inner oil paths 30 (30A, 30B) and the annular collecting paths 35 (35A, 35B).

In some embodiments, the cylinder block 26 includes a plurality of cylinder sleeves 40 having the plurality of cylinders 24, respectively, and a cylinder block body 50 having a plurality of sleeve holes 52 into which the plurality of cylinder sleeves 40 is inserted, respectively.

As some of the functions that the cylinder block 26 is expected to serve, the cylinder block 26 serves to form the cylinder 24 as the slide part for guiding the piston 22 slidably and also serves to form a structure for supporting the cylinder 24. By providing the cylinder sleeve 40 and the cylinder block body 50 separately as described above, the functions expected in the cylinder block 26 (formation of the cylinder 24 and formation of the structure) can be shared between the cylinder sleeve 40 and the cylinder block body 50. This enables designing of the cylinder sleeve 40 and the cylinder block body 50 according to their respective functions, hence achieving reduced weight of the cylinder block 26 as a whole.

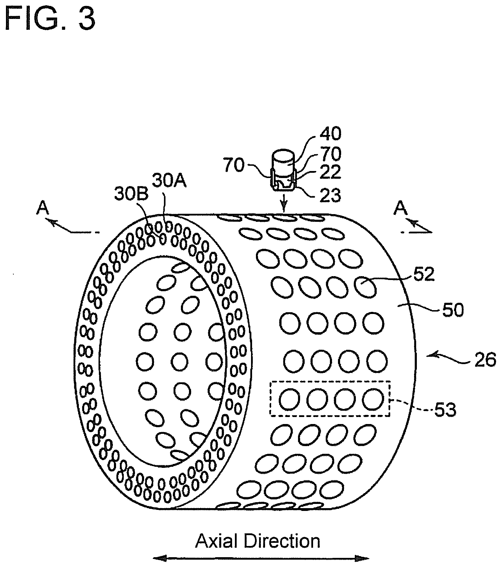

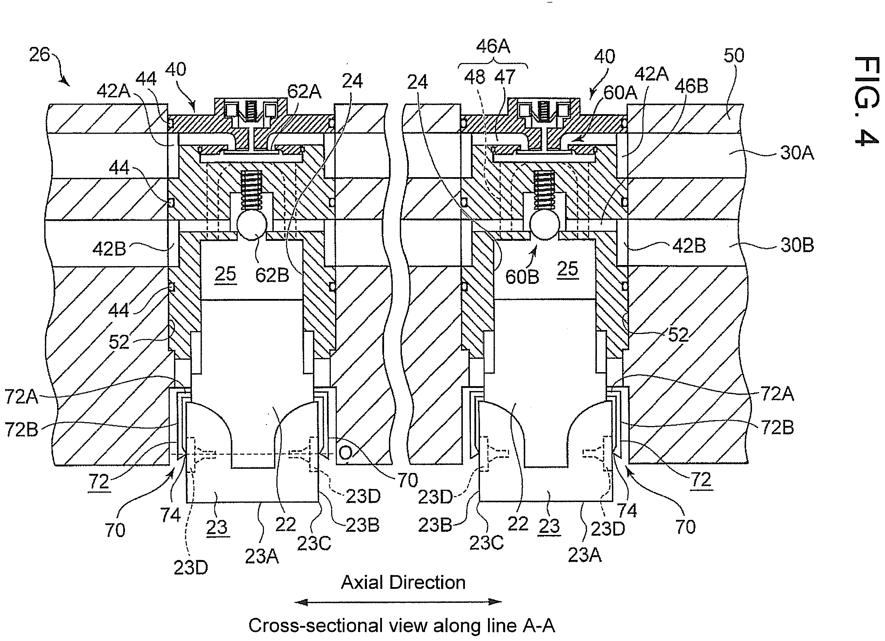

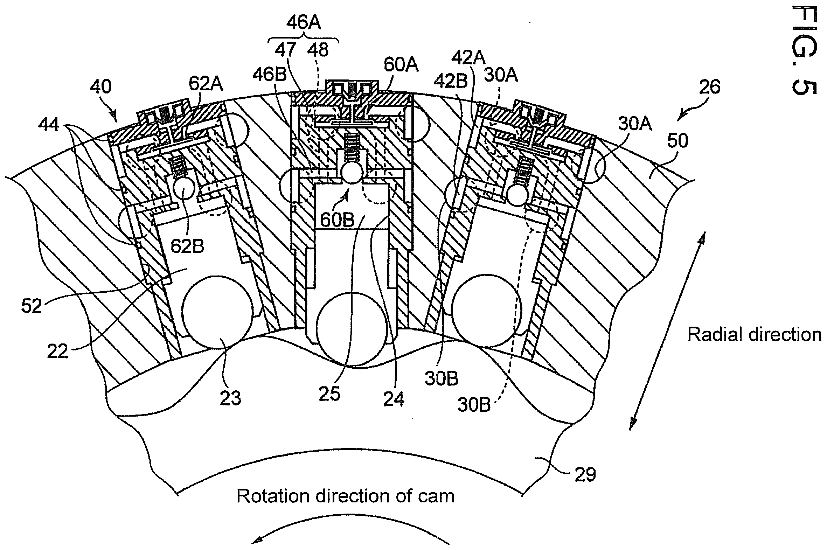

FIG.3 is an oblique view of the cylinder block according to one embodiment. FIG.4 is a cross-sectional view of the cylinder block of FIG.3 taken along line A-A of FIG.3. FIG.5 is a cross-sectional view of the cylinder block of FIG.3 taken along a radial direction of the cylinder block.

As illustrated in FIG.3 to FIG.5, in one embodiment, the cylinder block body 50 may be an annular member having both at least one inner oil path 30 (30A, 30B) and a plurality of the sleeve holes 52. Further, it may adopt a cylinder block body 50 which is continuous over the entire periphery in the circumferential direction of the hydraulic machine 20.

In some embodiments, as illustrated in FIG.4 and FIG.5, the cylinder sleeve 40 comprises at least one annular groove 42 (42A, 42B). The at least one annular groove 42 (42A, 42B) is formed on an outer peripheral surface of the cylinder sleeve 40 and opens to the at least one inner oil path 30 (30A, 30B). On each side of each annular groove 42 (42A, 42B) in the radial direction of the hydraulic machine 20, an annular seal member 44 provided on an outer peripheral surface of the cylinder sleeve 40 to seal a gap between the cylinder sleeve 40 and the sleeve hole 52. Further, in the cylinder sleeve 40, a communication path 46 (46A, 46B) is provided for communication between each of the annular grooves 42 (42A, 42B) and the hydraulic chamber 25. In each communication path 46 (46A, 46B), a valve 60 (60A, 60B) is provided for switching the state of communication between the inner oil path 30 (30A, 30B) of the valve block 26 and the hydraulic chamber 25.

In one embodiment, the at least one inner oil path 30 (30A, 30B) includes the oil supply path 30A for supplying the operating oil to the hydraulic chamber 25 and the oil discharge path 30B for discharging the operating oil from the hydraulic chamber 25. Further, the at least one annular groove 42 provided in the cylinder sleeve 40 includes an oil supply groove 42A opening to the oil supply path 30A inside the cylinder block body 51, and an oil discharge groove 42B opening to the oil discharge path 30B inside the cylinder block body 51. Furthermore, the communication path 46 includes an oil supply communication path 46A for communication between the hydraulic chamber 25 and the oil supply groove 42A via the oil supply valve 60A, and an oil discharge communication path 46B for communication between the hydraulic chamber 25 and the oil discharge groove 42B via the oil discharge groove 69B.

In one embodiment, the oil supply valve 60A and the oil discharge valve 60B are incorporated in the cylinder sleeve 40 such that the oil supply valve 60A and the oil discharge valve 60B are aligned in the radial direction of the hydraulic chamber 20, and the valve element 62A of the oil supply valve 60A lays over the valve element 62B of the oil discharge valve 60B with respect to the radial direction of the hydraulic machine 20. In this manner, corresponding to the oil supply valve 60A and the oil discharge valve 60B which are provided at different positions in the radial direction of the hydraulic machine 20, the oil supply groove 42A and the oil discharge grove 42B are provided at different positions in the radial direction of the hydraulic machine 20 on the outer peripheral surface of each of the cylinder sleeves 40. The communication path 46A corresponding to the oil supply valve 60A located farther from the hydraulic chamber 25 includes a first communication path 47 extending along the direction perpendicular to the radial direction of the hydraulic machine 20 and a second communication path 48 extending along the radial direction of the hydraulic machine 20. Meanwhile, the oil discharge communication path 46B corresponding to the oil discharge valve 60 disposed nearer to the hydraulic chamber 25 extends along the direction perpendicular to the radial direction of the hydraulic chamber while avoiding the second communication path 48 of the oil supply communication path 46A.

As a result, it is possible to achieve effective arrangement within the cylinder sleeve 40, regarding the oil supply valve 60A and the oil discharge valve 60B as well as the oil supply communication path 46A and the oil discharge communication path 46B.

In the case where the hydraulic machine 20 is a hydraulic pump, when the oil supply valve 60A is opened, the operating oil from the oil supply path 30A inside the cylinder block body 50 is introduced into the hydraulic chamber 25 via the oil supply groove 42A and the oil supply communication path 46A. Then, the operating oil introduced to the hydraulic chamber 25 is compressed and pressurized by volume reduction of the hydraulic chamber 25 in response to the movement of the piston 22 moving from the bottom dead center to the top dead center. The high pressure operating oil (pressurized oil) obtained in this manner is then drawn, by opening of the oil discharge valve 60B, to the oil discharge path 30B inside the cylinder block body 50 via the oil discharge communication path 46B and the oil discharge groove 42B.

In contrast, in the case where the hydraulic machine 20 is a hydraulic motor, when the oil supply valve 60A is opened, high pressure operating oil (pressurized oil) from the oil supply path 30A inside the cylinder block body 50 is introduced into the hydraulic chamber 25 via the oil supply groove 42A and the oil supply communication path 46A. By this operating oil introduced to the hydraulic chamber 25, the piston 22 is caused to move from the top dead center to the bottom dead center. Then, the operating oil in the hydraulic chamber 25 is drawn, by opening of the oil discharge valve 60B, to the oil discharge path 30B inside the cylinder block body 50 via the oil discharge communication path 46B and the oil discharge groove 42B.

In one embodiment, as illustrated in FIG.3, a plurality of axial-direction hole arrays 53 is provided in the circumferential direction of the hydraulic machine 20. Each of the axial-direction hole arrays 53 is formed by a plurality of the sleeve holes 52 aligned along the axial direction of the hydraulic machine 20. Meanwhile, inside the cylinder block body 50, a plurality of the oil supply paths 30A and a plurality of oil discharge paths 30B extend along the axial direction of the hydraulic machine 20 as illustrated in FIG.4 and FIG.5. Each of the oil supply paths 30A and each of the oil discharge paths 30B formed in the cylinder block body 50 open to the oil supply grooves 42A and the oil discharge grooves 42B of a plurality of the cylinder sleeves 40 inserted in a plurality of the sleeve holes 52 belonging to each of the axial-direction hole arrays 53, and communicate with corresponding hydraulic chambers 25 of the axial-direction hole array 53. In this case, as illustrated in FIG.4 and FIG.5, each of the hydraulic chambers 25 may communicate with a plurality of the oil supply paths 30 and a plurality of the oil discharge paths 30B.

In the radial piston hydraulic machine having the above configuration, various element such as a side force from the cam 29 may cause displacement of the roller 23 in the axial direction (the width direction of the roller).

In view of this, the radial piston hydraulic machine of this embodiment is provided with a roller displacement regulating part for regulating displacement of the roller 23 in the axial direction.

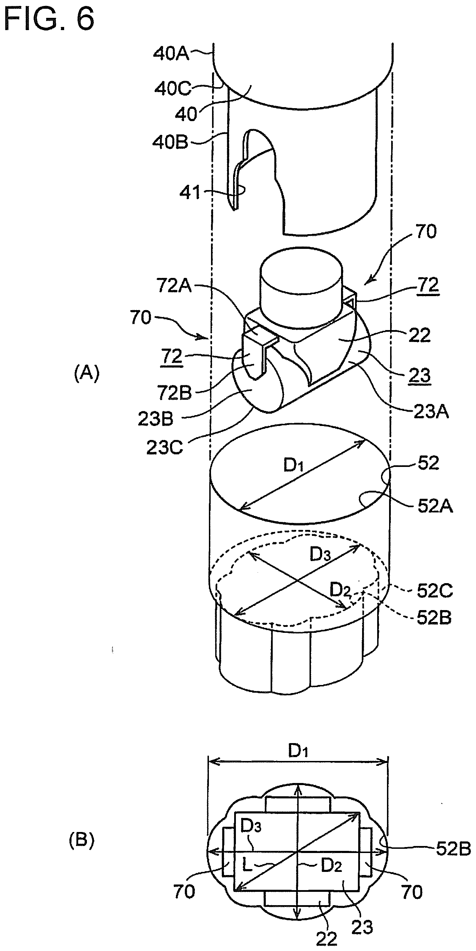

In reference to FIG.4, FIG.6A, and FIG.6B, the roller displacement regulating part and its peripheral structure are described below. FIG.6A is an oblique view of the cylinder block according to one embodiment, and FIG.6B is a plan view of this cylinder sleeve.

As illustrated in FIG.4, FIG.6A and FIG.6B, the roller 23 comprises a roller body 23A having an outer peripheral surface which contacts the cam 29, and a pair of end surfaces 23B, 23B formed on both sides of the roller body 23A. Each of the end surfaces 23B, 23B may have a crowned peripheral edge portion so as to suppress increase of contact pressure at the peripheral edge portion belonging to each of the end surfaces 23B, 23B of the roller 23 when the roller 23 contacts the cam surface.

A roller displacement regulating part 70 is provided in each of the pistons 22. The roller displacement regulating part 70 is configured to contact a region of at least one end surface 23B of each of the rollers 23, exclusive of the peripheral edge portion, so as to regulate the axial displacement of the roller 23. The peripheral edge portion of the roller 23 refers to a section in the vicinity of a peripheral edge 23C disposed at the outermost periphery of the end surface 23B of the roller 23, the section including the peripheral edge 23C. Therefore, the region of at least one of the end surfaces 23B of the roller 23 except the peripheral edge portion is a region nearer to the rotation center O side of the roller 23 than the peripheral-edge inclusive section in the vicinity of the peripheral edge. By providing the roller displacement regulating part 70 in the piston 22 in this manner, there is no relative movement between the roller 23 and the roller displacement regulating part 70 in the rotation direction of the cam 29 when the cam 29 rotates. Thus, it is possible to suppress friction wear of the roller 23 and the roller displacement regulating part 70. Further, as the roller displacement regulating part 70 is configured to contact the region, exclusive of the peripheral edge portion, of at least one of the end surfaces 23B of the roller 23, it is possible to avoid contact of the roller displacement regulating part 70 with the peripheral edge portion whose circumferential speed is high and also possible to reduce frictional wear of the roller 23 and the roller displacement regulating part 70.

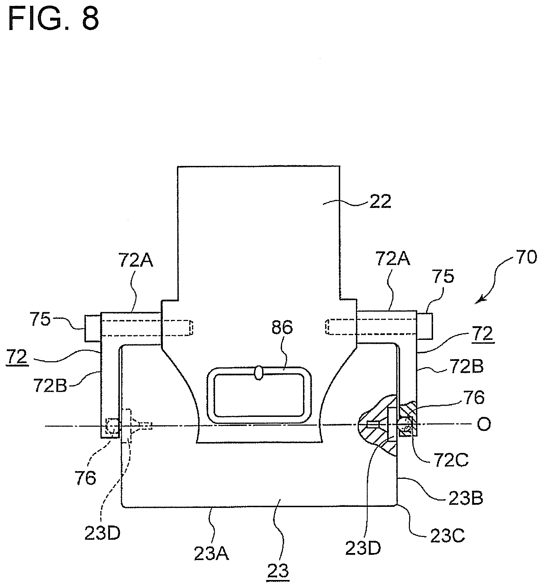

In one embodiment, the roller displacement regulating part 70 includes a pair of arms 72, 72 extending from each of the pistons 22 to the end surfaces 23B, 23B of each of the rollers 23, and a pair of protrusion 74, 74 provided on the pair of arms 72, 72 to serve as a pair of contact parts, respectively. The arm 72 may comprise a first section 72A attached to the outer peripheral surface of the piston 22 and extending along the axial direction of the roller 23 from the piston 22, and a second section 72B connected to the first section 72A via a bending portion and extending in the radial direction of the roller 23. In this case, on the opposite end of second section 72 from the bending portion, the protrusion 74 is provided protruding toward the end surface 23B of the roller 23. As the pair of contact parts is constituted by the pair of protrusions 74, 74 in the above manner, it is possible to simplify the structure of the section where the roller 23 contacts the roller displacement regulating part 70, and to reduce the production cost. Further, the first section 72A may be fastened to the outer peripheral surface of the piston 22 by a bolt (see FIG.8, FIG.9 and FIG.10). As a result, the roller displacement regulating part 70 can be configured to be detachable at low cost and the roller displacement regulating part 70 can be replaced easily as well.

In one embodiment, the roller 23 comprises a receiving part 23D arranged in a place (at a rotation center O of the roller 23) where the roller 23 contacts the protrusion 74. The receiving part 23D is made of a material which has a lower frictional resistance than the end surface 23B of the roller 23 (exclusive of the receiving part 23D). Specifically, the material constituting the end surface 23B of the roller 23 may be different from the material constituting the receiving part 23D, or a coating for reducing the frictional resistance may be applied on the surface of the receiving part 23D. In this manner, by providing, at the rotation center O of the roller 23, the receiving part 23 which contacts the protrusion 74 of the roller displacement regulating part 70 and constituting the receiving part 23D of the material having a smaller frictional resistance than the end surface 23B of the roller 23, it is possible to suppress frictional wear of the receiving part 23D and the protrusion 74 caused by rotational motion of the roller 23.

Moreover, at least one of the pair of protrusions 74, 74 may be configured to contact the rotation center O of the roller 23 on the end surface 23B of the roller 23. The circumferential speed is faster on the peripheral edge 23C side of the end surface 23B belonging to the roller 23, and the circumferential speed decreases with distance to the rotation center O from the peripheral edge 23C. Therefore, by configuring at least one of the pair of protrusions 74, 74 to contact the section of the end surface 23 of the roller 23, where the circumferential speed is zero (the roller rotation center O), it is possible to suppress frictional wear of the roller 23 and the roller displacement regulating part 70 caused by the rotational motion of the roller 23.

A distance between the pair of protrusions 74, 74 may be larger than a distance between the end surfaces 23B, 23B of the roller 23. Specifically, it may be configured so that, when one of the protrusions 74 contacts one of the end surfaces 23B, there is a clearance between the other of the protrusions 74 and the other of the end surfaces 23B. The positions of the pair of protrusions 74 are set corresponding to an allowable range of the axial displacement of the roller 23 relative to the cam 29. As a result, it is possible to further suppress the frictional wear of the protrusion 74 of the piston 22 and the end surface 23B of the roller 23. Alternatively, it may be configured such that the distance between the protrusions 74, 74 is approximately the same as the distance between the end surfaces 23B, 23B so that the protrusions 74, 74 simultaneously contact the end surfaces 23B, 23B, respectively.

In one embodiment, a depression may be provided on the end surface 23B of the roller 23 where the protrusion 74 contacts (a position corresponding to the rotation center O of the roller 23). As a result, when the protrusion 74 contacts the roller 23, the protrusion 74 is positioned such as to engage with the depression. Thus, the protrusion 74 is surely brought into contact with the rotation center O of the roller 23, and it is possible to suppress frictional wear of the roller 23 and the roller displacement regulating part 70. Further, the depression may be provided on each of the end surfaces 23B of the roller 23 so that the protrusions 74, 74 are in constant engagement with the protrusions 74, 74. As a result, the roller 23 can be retained to the piston 22 side via the roller displacement regulating part 70. Specifically, as the protrusion 74 is in engagement with the roller 23, the roller 23 moves with the piston 22 when the piston 22 moves in the axial direction.

In another embodiment, instead of the configuration where the protrusion 74 is provided on the arm 72 side, the protrusion may be provided on the roller 23 side. In this embodiment, the protrusion is provided at the rotation axis O of the roller 23 on the end surfaces 23B, 23B of the roller 23. In this case, the contact part of the roller displacement regulating part 70 with respect to the roller 23 is a tip portion of the arm 72.

In some embodiments, a pair of notches 41, 41 is formed in places of the cylinder sleeve 40 corresponding to the pair of roller displacement regulating parts 70, 70 (the arms 72, 72). In the drawing, only one of the notches 41 is illustrated. By providing the pair of notches 41 in the cylinder sleeve 41 to prevent interference with the pair of arms 72, 72 as described above, it is possible to prevent the pair of arms 72, 72 from inhibiting the reciprocating motion of the piston 22 and also enable smooth movement of the piston 22.

In one embodiment, as illustrated in FIG.6A and FIG.6B, the cylinder sleeve 40 comprises an upper cylindrical part 40A disposed on an outer circumferential side of the cylinder block 50 and a lower cylindrical part 40B disposed on an inner circumferential side of the cylinder block 50. Between the upper cylindrical part 40A and the lower cylindrical part 40B, a stepped portion 40C is provided. Corresponding to this, the sleeve hole 52 provided in the cylinder block 50 comprises an upper hole part 52A and a lower hole part 52B. Between the upper hole part 52A and the lower hole part 52B, a stepped portion 52C is provided. By bringing the stepped portion 40C of the cylinder sleeve 40 into contact with the stepped portion 52C of the cylinder block 50 in the state where the cylinder sleeve 40 is inserted in the sleeve hole 52, the position of the cylinder sleeve 40 is fixed in the radial direction of the cylinder block 50. Herein, "upper" and "lower" refer to an upper side and a lower side in the drawing, respectively, and does not indicate absolute positions of the cylinder sleeve 40 and the sleeve hole 52.

The hole of the upper hole part 52A has a cylindrical shape corresponding to the shape of the upper cylindrical part 40A, and the hole of the lower hole part 52B may be formed by a plurality of curved surface on the outer side. Diameter D₁ of the upper hole part 52A is approximately the same as the diameter of the upper cylindrical part 40A. Further, the lower hole part 52B has short diameter D₂ which is larger than width of the piston 22 and the roller 23 in the rotation direction of the cam, and long diameter D₃ which is larger than width of the pair of roller displacement regulating parts 70, 70 (arms 72, 72). Therefore, the lower hole part 52B is configured not to contact the roller 23 and the pair of arms 72, 72 at the reciprocating motion of the piston 22 and the roller 23. With this configuration, it is possible to reduce the volume of the the sleeve holes 52 occupying the cylinder block 50 on the inner peripheral side of the cylinder block 50 where components are intensively arranged.

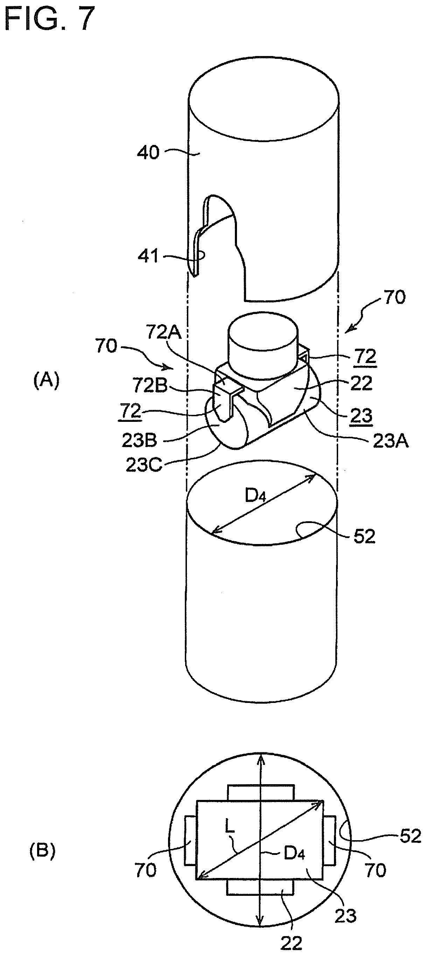

In another embodiment, the cylinder sleeve 40 and the sleeve hole 52 may be configured as illustrated in FIG.7A and FIG.7B. Herein, FIG.7A is an oblique view of the cylinder block according to this embodiment and FIG.7B is a plan view of the cylinder sleeve according to this embodiment.

In this embodiment, the cylinder sleeve 40 is formed into a stepless cylindrical shape. Meanwhile, the sleeve hole 52 is formed into a columnar shape having diameter D₄ corresponding to the cylinder sleeve 40. The diameter D₄ is larger than length L of a diagonal line of the roller 23. With this configuration, it is possible to improve workability of the cylinder sleeve 40 and the cylinder block 50.

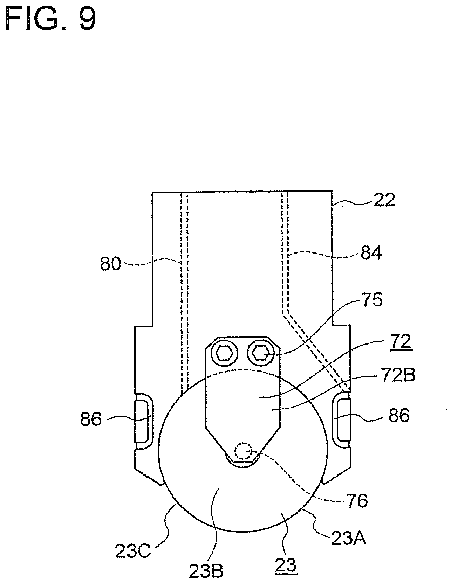

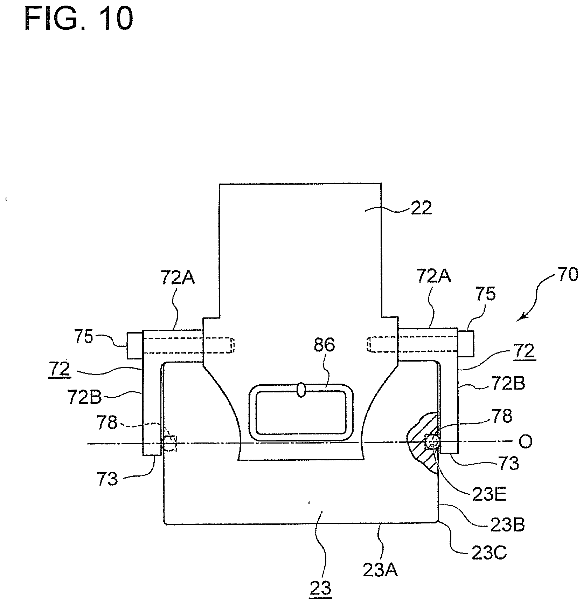

In another embodiment, the roller displacement regulating part may be configured as illustrated in FIG.8 to FIG.10. Herein, FIG.8 is a front view of the piston and the roller according to another embodiment. FIG.9 is a side view of the piston and the roller according to another embodiment. FIG.10 is a front view of the piston and the roller according to another embodiment. In FIG.8 and FIG.10, one of the pair of roller displacement regulating parts is illustrated as a fragmentary cross-sectional view.

In the embodiment illustrated in FIG.8 and FIG.9, the roller displacement regulating part 70 comprises a pair of arms 72, 72 extending from each of the pistons 22 to the end surfaces 23B, 23B of each of the rollers 23, and a pair of contact parts which is provided in the pair of arms72, 72, respectively, and a pair of balls 76, 76 provided on the pair of arms 72, 72, respectively, to serve as a pair of contact parts. In one embodiment, the arm 72 may comprise a first section 72A attached to the outer peripheral surface of the piston 22 and extending along the axial direction of the roller 23 from the piston 22, and a second section 72B connected to the first section 72A via a bending portion and extending in the radial direction of the roller 23. The first section 72A may be fastened to the outer peripheral surface of the piston 22 by a bolt 75. As a result, the arm 72 can be configured to be detachable from the piston 22. The ball 76 is accommodated in a recess 72C formed in a tip portion of the second section 72B and is configured to rollably contact the end surface 23B of the roller 23.

As described above, by placing the ball 76 between the tip portion of the arm 72 and the end surface 23B of the roller 23 (the rotation center O of the roller 23) to serve as the contact part, the ball 76 rolls in response to rotation of the roller 23. Herein, it is mainly rolling friction that takes place between the roller 23 and the roller displacement regulating part 70. The rolling friction is smaller than a sliding friction, and thus it is possible to further reduce frictional wear of the roller 23 and the roller displacement regulating part 70 (the tip portion of the arm 72 and the ball 76) caused by the rotational movement of the roller 23.

From the perspective of further suppressing the frictional wear, a receiving part 23D may be provided in the end surface 23B of the roller 23 where the ball 76 contacts the roller 23 (at the rotation center O of the roller 23). The receiving part 23D is made of a material which has a lower frictional resistance than the end surface 23B of the roller 23 (exclusive of the receiving part 23D).

Moreover, at least one of the pair of balls 76, 76 may be configured to contact the rotation center O of the roller 23 on the end surface 23B of the roller 23. As a result, it is possible to suppress frictional wear of the roller 23 and the roller displacement regulating part 70 (the tip portion of the arm 72 and the ball 76) caused by the rotational movement of the roller 23.

Further, a depression may be provided on the end surface 23B of the roller 23 where the ball 76 contacts (a position corresponding to the rotation center O of the roller 23). As a result, when the ball 76 contacts the roller 23, the ball 76 is positioned such as to engage with the depression. Therefore, the ball 76 is surely brought into contact with the rotation center O of the roller 23, and thus it is possible to suppress frictional wear of the roller 23 and the roller displacement regulating part 70 (the tip portion of the arm 72 and the ball 76).

In the embodiment illustrated in FIG.10, a ball 78 is retained to the roller 23 side. Specifically, the ball 78 is accommodated in a recess 23E provided at the rotation center O on the end surface 23B of the roller 23, and this ball 78 is configured to rollably contact the tip portion 73 of the arm 72.

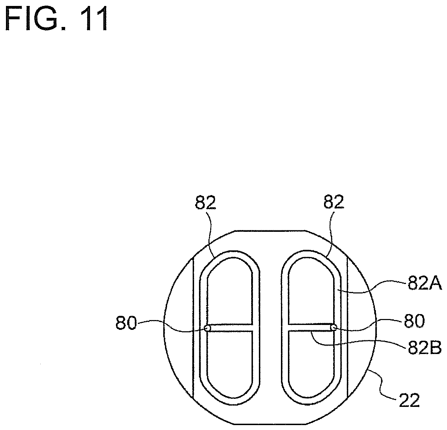

As illustrated in FIG.8 through FIG.11, the hydraulic machine 20 according to one embodiment may have the configuration for supplying lubricating oil to the piston 22 and the roller 23. FIG.11 is a schematic view of an engagement surface between the piston with respect to the roller.

In one embodiment illustrated in FIG.8 through FIG.11, the piston 22 is provided with an inner flow path 80 for introducing operating oil from the hydraulic chamber (see FIG.2, FIG.4 and FIG.5) to the engagement surface between the piston 22 and the roller 23. Further, the piston 22 is provided with at least one oil groove 82 formed facing the engagement surface. This oil groove 82 communicates with the inner flow path 80. The operating oil in the hydraulic chamber 25 is supplied to the oil groove 82 via the inner flow path 80 provided in the piston 22. For instance, the oil groove 82 is configured by an annular groove portion 82A and a transverse groove portion 82B traversing the annular groove portion 82A. The operating oil supplied from the inner flow path 80 is led to the annular groove portion 82A and the transverse groove portion 82B. As a result, the operating can be supplied effectively to the engagement surfaces between the piston 22 and the roller 23 as the lubricating oil, and thus a hydrostatic oil film can be formed by oil pressure in a stable manner.

In addition to the inner flow path 80, another inner flow path 84 may be provided in the piston 22. This inner flow path 84 communicates with the oil groove 86 formed in the outer peripheral surface of the piston 22. By supplying the operating oil to the oil groove 86 via the inner flow path 84, it is possible to improve slidability of the piston 22 and the cylinder 24 relative to each other.

Further, the inner flow paths 80, 84 each have a passage diameter sufficiently smaller than a passage diameter of the first communication path 47 and the second communication path 48 that are illustrated in FIG.4 and FIG.5.

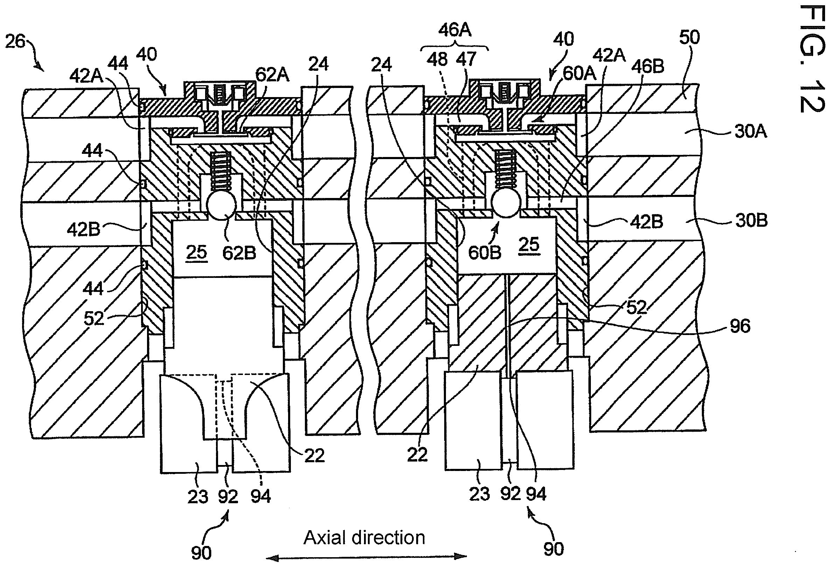

In another embodiment, the roller displacement regulating part may be configured as illustrated in FIG.12. Herein, FIG.12 is a cross-sectional view of the cylinder block according to another embodiment, taken along the axial direction of the cylinder block.

In another embodiment, a depression 92 is provided on the outer peripheral surface of the roller 23 along the circumferential direction of the roller 23. The depression 92 may be formed in a continuous manner over the entire circumference of the roller 23 in the circumferential direction. Illustrated in the drawing is the case where one depression 92 is provided. However, this is not restrictive and a plurality of depressions 92 may be provided.

A roller displacement regulating part 90 is provided on the piston 22 and includes a projection 94 which is contactable with the depression 92. In the case where a plurality of depressions 92 is provided, a plurality of projections 94 may be provided corresponding to the plurality of depressions 92. As a result, the roller 23 rotates in the state where at least one projection 94 provided on the piston 22 engages with at least one depression 92 provided on the roller 23 and thus, a relative position of the roller 23 relative to the piston 22 can be held constant. Herein, as the piston 22 is inserted in the cylinder sleeve 40, the position of the roller 23 can be constant relative to a position of the cam surface in the width direction. Therefore, the roller 23 can be held at an appropriate position relative to the cam surface. Further, in addition to the projection 94 and the depression 92 serving as the roller displacement regulating part 90, the arm 72 serving as the above-described roller displacement regulating part 70 may be provided.

As illustrated in FIG.8, an inner flow path 96 may be provided in the piston 22 for communication between: the hydraulic chamber 25 formed by the piston 22 and the cylinder 24 and; and a space between the piston 22 and the roller 23. The inner flow path 96 has a passage diameter sufficiently smaller than a passage diameter of the first communication path 47 and the second communication path 48. The operating oil is supplied from the hydraulic chamber 25 through the inner flow path 96 to between the piston 22 and the roller 23, and this supplied operating oil serves as the lubricating oil. In this case, the inner flow path 96 may be configured to open to the engagement part between the projection of the piston 22 and the depression of the roller 23. By configuring the inner flow path 96 for leading the operating oil to the contact part between the piston 22 and the roller 23 to extend to the engagement part between the depression 92 provided on the roller 23 and the projection 94 provided on the piston 22, it is possible to attain lubricity at the engagement part and also reduce the frictional wear at the engagement part.

As described above, according to the above embodiments, it is possible to hold the roller 23 at an appropriate position on the cam surface by means of the roller displacement regulating part 70, 90 for regulating the axial displacement of the roller 23. Further, by providing the roller displacement regulating part 70, 90 on the piston 22, it is possible to suppress frictional wear of the roller 23 and the roller displacement regulating part 70, 90. Furthermore, as the roller displacement regulating part 70, 90 is configured to contact a region of at least one end surface 23B of the roller 23, exclusive of the peripheral edge portion, it is possible to avoid contact of the roller displacement regulating part 70, 90 with the peripheral edge portion of the end surface 23B, where the circumferential speed is high, thereby reducing frictional wear of the roller 23 and the roller displacement regulating part 70, 90. Moreover, as the roller displacement regulating part 70, 90 is provided on each of the pistons 22, it is possible to avoid weight increase of the radial piston hydraulic machine 20, compared to the case where the side panels are provided on both sides of the cam surface.

While the embodiments of the present invention have been described, it is obvious to those skilled in the art that various changes and modification may be made without departing from the scope of the invention. For instance, the above embodiments may be arbitrarily combined.

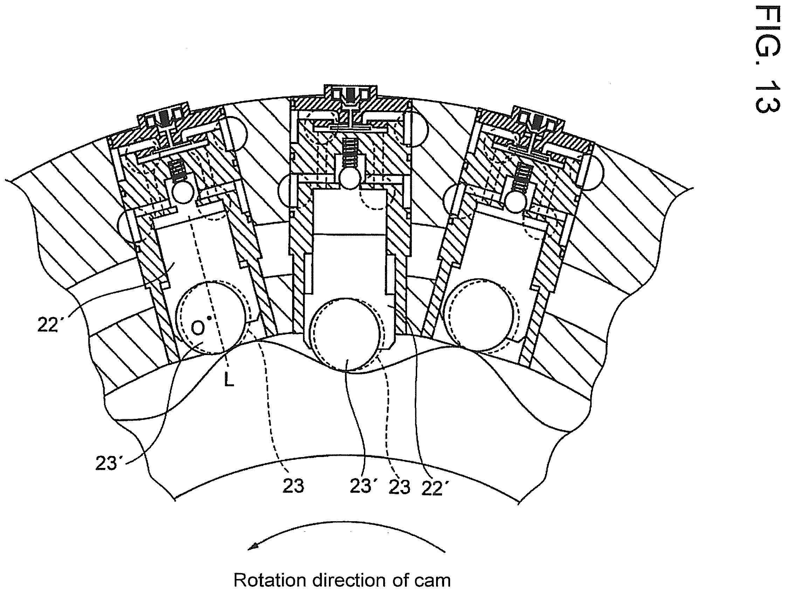

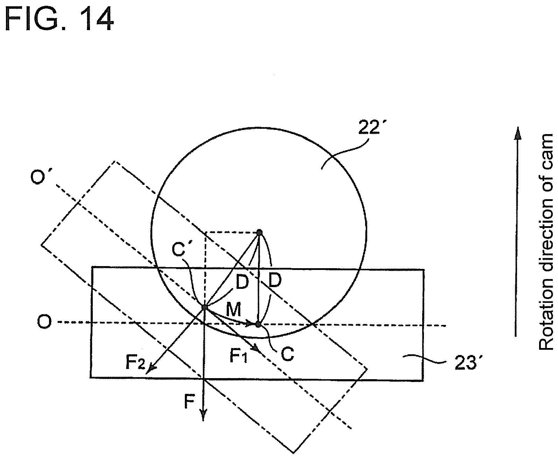

For instance, in the above embodiments, the rotation center O of the roller 23 is located on the center axis L of the cylinder sleeve 40. This is, however, not restrictive and, as illustrated in FIG. 13 and FIG. 14, a roller 23' may be arranged such that the rotation center O of the roller 23' is positioned downstream relative to the center axis L of the cylinder sleeve 40 in the rotation direction of the cam 29 (a direction of an arrow in the drawing). Herein, FIG.13 is a cross-sectional view of the cylinder block according to another embodiment, taken along the radial direction. FIG.14 is an explanatory view of a configuration of the roller according to another embodiment. In FIG.13, the dotted line indicates the roller 23 in the case where the rotation center O is positioned on the center axis L of the cylinder sleeve 40. Further, the double-dotted line in FIG. 14 indicates a roller 23" in a skewing state.

As illustrated in FIG.14, the roller 23' is arranged so that the rotation center O is positioned downstream relative to the center axis L by distance D in the rotation direction of the cam 29 in a normal state (in the state where the roller 23' is not skewed). When skew of the roller 23' occurs, the position of the roller 23' changes to the position of the roller 23" indicated by the double dotted line in the drawing. Then, when the cam 29 rotates, force F in a direction opposite to the rotation direction of the cam 29 acts on a gravity center position C' of the skewed roller 23". This force F contains a component F₁ in the direction of the rotation center O' of the roller 23" and a component F₂ in the direction perpendicular to the rotation center O'. By the component F₁ in the direction of the rotation center O' of the roller 23", a moment M acts on the roller 23" in the direction of moving from the gravity center position C' of the roller 23" to the gravity center C of the roller 23' in the normal state. By this moment M, the skewed roller 23" is corrected to the position of the roller 23' in the normal state. As a result, it is possible to return the roller 23 to an appropriate attitude with respect to the rotation direction of the cam 29.

The term "along" used in the description of the above embodiments not just refers to a state of being strictly parallel in a geometric sense with respect to a reference direction or object as a reference but also includes a state of being at an angle to a certain extent with respect the reference direction or object (e.g. 30° or less).

### [Reference Signs list]

- 1: Wind turbine generator
- 2: Blade
- 3: Rotor
- 4: Hub
- 5: Hub cover
- 6: Rotation shaft
- 8: Hydraulic pump
- 10: Hydraulic motor
- 12: High pressure oil line
- 14: Low pressure oil line
- 16: Generator
- 18: Nacelle
- 19: Tower
- 20: Hydraulic machine
- 22, 22': Piston
- 23, 23' 23": Roller
- 23A: Roller body
- 23B: End surface
- 23C: Peripheral edge
- 23D: Receiving part
- 23E: Recess
- 24: Cylinder
- 25: Hydraulic chamber
- 26: Cylinder block
- 27A, 27B: Bearing
- 29: Cam
- 30A, 30B: Inner oil path
- 34: End plate
- 35A, 35B: Annular collecting path
- 36A, 36A: outer pipe
- 40: Cylinder sleeve
- 40A: Upper cylindrical part
- 40B: Lower cylindrical part
- 40C: Stepped portion
- 41: Notch
- 42A, 42B: Annular groove
- 44: Seal member
- 46A, 46B: Communication path
- 47: First communication path
- 48: Second communication path
- 50: Cylinder block body
- 52: Sleeve hole
- 52A: Upper hole part
- 52B: Lower hole part
- 52C: Stepped portion
- 70, 90: Roller displacement regulating part
- 72: Arm
- 72A: First section
- 72B: Second section
- 72C: Recess
- 73: Contact part (tip portion)
- 74: Protrusion
- 75: Bolt
- 76, 78: Ball
- 80, 84, 96: Inner flow path
- 82, 86: Oil groove
- 92: Depression
- 94: Projection

## Claims

1. A radial piston hydraulic machine (20) comprising:
- pistons (22, 22') arranged along a radial direction of the hydraulic machine (20);
- rollers (23, 23', 23") provided rotatably for the pistons (22, 22'), respectively;
- a cylinder block (26) comprising cylinders (24) for guiding the respective pistons (22, 22') reciprocably along the radial direction; and
- a cam (29) configured to contact the rollers (23, 23', 23"),
wherein each of the pistons (22, 22') includes a roller displacement regulating part (70, 90) which is configured to contact a region of at least one end surface (23B) of the corresponding roller (23, 23', 23") except a peripheral edge (23C) portion so as to regulate an axial displacement of the corresponding roller (23, 23', 23"), wherein the roller displacement regulating part (70, 90) includes a pair of arms (72) extending from each of the pistons (22, 22') to end surfaces (23B) of each of the rollers (23, 23', 23"), and a pair of contact parts (73) which is provided in the pair of arms (72), respectively, and
wherein at least one of the pair of contact parts (73) is configured to contact a rotation center (0) of the roller (23, 23', 23") on the end surface (23B) of the roller (23, 23', 23") so as to regulate the axial displacement of the roller (23, 23', 23"); and
**characterized in that** the arm (72) comprises a first section (72A) attached to an outer peripheral surface of the piston (22, 22') and extending along an axial direction of the roller (23, 23', 23") and a second section (72B) connected to the first section (72A) via a bending portion and extending in a radial direction of the roller (23, 23', 23").

2. The radial piston hydraulic machine (20) according to claim 1,
wherein the contact part (73) is a ball which is provided at a tip portion of the arm (72) and configured to contact the end surface (23B) of the roller such that the roller (23, 23', 23") is allowed to roll.

3. The radial piston hydraulic machine (20) according to claim 1,
wherein a protrusion (74) is provided on the end surface (23B) of the roller (23, 23', 23") to contact the contact part (73) which is a tip portion of (73) the arm (72).

4. The radial piston hydraulic machine (20) according to claim 1,
wherein the contact part (73) is constituted by a protrusion (74) provided on a tip portion (73) of the arm (72) to contact the end surface (23B) of the roller (23, 23', 23").

5. The radial piston hydraulic machine (20) according to any one of claims 1 to 4, wherein the roller (23, 23', 23") includes a receiving part (23D) arranged at a rotation center (O) of the roller (23, 23', 23") to contact the contact part (73), an end surface (23B) to which the receiving part (23D) is attached, and a roller body (23A) having an outer peripheral surface contacting the cam (29), the receiving part (23D) being made of a material which has a lower frictional resistance than the end surface (23B).

6. The radial piston hydraulic machine (20) according to claim 1,
wherein the first section (72A) is fastened by a bolt (75) to the outer peripheral surface of the piston (22, 22').

7. The radial piston hydraulic machine (20) according to any one of claims 1 to 6, wherein the cylinder block (26) comprises:
cylinder sleeves (40) having the cylinders (24), respectively; and
a cylinder block body (50) having sleeve holes (52) where the cylinder sleeves (40) are inserted, respectively, and
wherein a notch (41) is provided in each of the cylinder sleeves (40) so as to prevent interference with the roller (23, 23', 23") displacement regulating part when each of the pistons (22, 22') reciprocates.

8. The radial piston hydraulic machine (20) according to any one of claims 1 to 7, wherein each of the pistons (22, 22') comprises an inner flow path (80, 84, 96) and at least one oil groove (82, 86), the inner flow path (80, 84, 96) being configured to lead operating oil from each of hydraulic chambers (25) respectively formed by the pistons (22, 22') and the cylinders (24) to each of engagement surfaces of the pistons (22, 22') and the rollers (23, 23', 23"), the at least one oil groove (82, 86) being formed to communicate with the inner flow path (80, 84, 96) and to face said each of the engagement surfaces.

9. The radial piston hydraulic machine (20) according to claim 6,
wherein each of the rollers (23, 23', 23") is disposed so that a rotation center (O) of said each of the rollers (23, 23', 23") is positioned downstream relative to a center axis (L) of each of the cylinder sleeves (40) in a rotational direction of the cam (41).

10. A wind turbine generator (1) comprising:
- at least one blade (2);
- a hub (4) on which the at least one blade (2) is mounted;
- a hydraulic pump (8) configured to be driven by rotation of the hub (4);
- a hydraulic motor (10) configured to be driven by pressurized oil generated by the hydraulic pump (8); and
- a generator configured (16) to be driven by the hydraulic motor (10),
wherein at least one of the hydraulic pump (8) or the hydraulic motor (10) is constituted by the radial piston hydraulic machine (20) according to any one of claims 1 to 9.

## Patentansprüche

1. Radialkolbenhydraulikmaschine (20), umfassend:
- Kolben (22, 22'), die entlang einer radialen Richtung der Hydraulikmaschine (20) angeordnet sind,
- Rollen (23, 23', 23"), die jeweils drehbar für die Kolben (22, 22') angeordnet sind,
- einen Zylinderblock (26), der Zylinder (24) umfasst, um die jeweiligen Kolben (22, 22') entlang der radialen Richtung hin und her laufend zu führen, und
- einen Nocken (29), der dazu konfiguriert ist, die Rollen (23, 23', 23") zu berühren,
wobei jeder der Kolben (22, 22') einen Rollenverlagerungsregulierungsteil (70, 90) aufweist, der dazu konfiguriert ist, einen Bereich von wenigstens einer Endfläche (23B) der entsprechenden Rolle (23, 23', 23") mit Ausnahme eines Umfangskantenabschnitts (23C) zu berühren, um eine axiale Verlagerung der entsprechenden Rolle (23, 23', 23") zu regulieren, wobei der Rollenverlagerungsregulierungsteil (70, 90) ein Paar von Armen (72), die sich von jedem der Kolben (22, 22') zu Endflächen (23B) einer jeden der Rollen (23, 23', 23") erstrecken, und ein Paar von Kontaktteilen (73) umfasst, das jeweils in dem Paar von Armen (72) vorgesehen ist, und
wobei wenigstens einer aus dem Paar von Kontaktteilen (73) dazu konfiguriert ist, ein Drehzentrum (O) der Rolle (23, 23', 23") an der Endfläche (23B) der Rolle (23, 23', 23") zu berühren, um die axiale Verlagerung der Rolle (23, 23', 23") zu regulieren, und
**dadurch gekennzeichnet, dass** der Arm (72) einen ersten Abschnitt (72A), der an einer äußeren Umfangsfläche des Kolbens (22, 22') angebracht ist und der sich entlang einer Achsenrichtung der Rolle (23, 23', 23") erstreckt, und einen zweiten Abschnitt (72B) umfasst, der mit dem ersten Abschnitt (72A) über einen Biegeabschnitt verbunden ist und der sich in einer radialen Richtung der Rolle (23, 23', 23") erstreckt.

2. Radialkolbenhydraulikmaschine (20) nach Anspruch 1,
wobei der Kontaktteil (73) eine Kugel ist, die an einem Spitzenabschnitt des Arms (72) vorgesehen ist und die dazu konfiguriert ist, die Endfläche (23B) der Rolle zu berühren, so dass die Rolle (23, 23', 23") rollen kann.

3. Radialkolbenhydraulikmaschine (20) nach Anspruch 1,
wobei an der Endfläche (23B) der Rolle (23, 23', 23") ein Vorsprung (74) vorgesehen ist, um den Kontaktteil (73), der ein Spitzenabschnitt (73) des Arms (72) ist, zu berühren.

4. Radialkolbenhydraulikmaschine (20) nach Anspruch 1,
wobei der Kontaktteil (73) durch einen Vorsprung (74) gebildet ist, der an einem Spitzenabschnitt (73) des Arms (72) vorgesehen ist, um die Endfläche (23B) der Rolle (23, 23', 23") zu berühren.

5. Radialkolbenhydraulikmaschine (20) nach einem der Ansprüche 1 bis 4,
wobei die Rolle (23, 23', 23") einen Aufnahmeteil (23D), der an einem Drehzentrum (O) der Rolle (23, 23', 23") angeordnet ist, um den Kontaktteil (73) zu berühren, eine Endfläche (23B), an der der Aufnahmeteil (23D) angebracht ist, und einen Rollenkörper (23A) mit einer äußeren Umfangsfläche, die den Nocken (29) berührt, umfasst, wobei der Aufnahmeteil (23D) aus einem Material besteht, das einen geringeren Reibungswiderstand als die Endfläche (23B) aufweist.

6. Radialkolbenhydraulikmaschine (20) nach Anspruch 1,
wobei der erste Abschnitt (72A) durch einen Bolzen (75) an der äußeren Umfangsfläche des Kolbens (22, 22') befestigt ist.

7. Radialkolbenhydraulikmaschine (20) nach einem der Ansprüche 1 bis 6,
wobei der Zylinderblock (26) umfasst:
Zylinderbuchsen (40), die jeweils die Zylinder (24) aufweisen, und
einen Zylinderblockkörper (50), der Buchsenöffnungen (52) aufweist, in die jeweils die Zylinderbuchsen (40) eingesetzt sind, und
wobei in jeder der Zylinderbuchsen (40) eine Kerbe (41) vorgesehen ist, um eine Interferenz mit dem Verlagerungsregulierungsteil für die Rollen (23, 23', 23") zu verhindern, wenn jeder der Kolben (22, 22') hin und her läuft.

8. Radialkolbenhydraulikmaschine (20) nach einem der Ansprüche 1 bis 7,
wobei jeder der Kolben (22, 22') einen inneren Fließweg (80, 84, 96) und wenigstens eine Ölnut (82, 86) umfasst, wobei der innere Fließweg (80, 84, 96) dazu konfiguriert ist, Betriebsöl von jeder von Hydraulikkammern (25), die jeweils durch die Kolben (22, 22') und die Zylinder (24) gebildet werden, zu jeder von Eingreifflächen der Kolben (22, 22') und der Rollen (23, 23', 23") zu leiten, wobei die wenigstens eine Ölnut (82, 86) so gebildet ist, dass sie mit dem inneren Fließweg (80, 84, 96) in Verbindung steht und jeder der Eingreifflächen zugewandt ist.

9. Radialkolbenhydraulikmaschine (20) nach Anspruch 6,
wobei jede der Rollen (23, 23', 23") so angeordnet ist, dass ein Drehzentrum (O) einer jeden der Rollen (23, 23', 23") in Bezug auf eine Mittelachse (L) einer jeden der Zylinderbuchsen (40) in einer Drehrichtung des Nockens (41) stromabwärts angeordnet ist.

10. Windturbinengenerator (1), umfassend:
- wenigstens einen Flügel (2),
- eine Nabe (4), an der der wenigstens eine Flügel (2) angebracht ist,
- eine Hydraulikpumpe (8), die dazu konfiguriert ist, durch eine Drehung der Nabe (4) angetrieben zu werden,
- einen Hydraulikmotor (10), der dazu ausgebildet ist, durch unter Druck stehendes Öl, das durch die Hydraulikpumpe (8) erzeugt wird, angetrieben zu werden, und
- einen Generator (16), der dazu konfiguriert ist, durch den Hydraulikmotor (10) angetrieben zu werden,
wobei wenigstens eines von der Hydraulikpumpe (8) oder dem Hydraulikmotor (10) durch die Radialkolbenhydraulikmaschine (20) nach einem der Ansprüche 1 bis 9 gebildet ist.

## Revendications

1. Machine hydraulique à pistons radiaux (20) :
- des pistons (22, 22') disposés le long d'une direction radiale de la machine hydraulique (20) ;
- des rouleaux (23, 23', 23") prévus de façon rotative pour les pistons (22, 22'), de manière respective ;
- un bloc-cylindres (26) comportant des cylindres (24) destinés à guider les pistons respectifs (22, 22') en va-et-vient le long de la direction radiale ; et
- une came (29) configurée pour venir en contact avec les rouleaux (23, 23', 23"),
dans lequel chacun des pistons (22, 22') comprend une partie de régulation de déplacement de rouleau (70, 90) qui est configurée pour venir en contact avec une zone de au moins une extrémité extérieure (23B) du rouleau correspondant (23, 23', 23") à l'exception d'une partie de bord périphérique (23C) de façon à réguler un déplacement axial du rouleau correspondant (23, 23', 23"), dans laquelle
la partie de régulation de déplacement de rouleau (70, 90) comprend une paire de bras (72) s'étendant depuis chacun des pistons (22, 22') jusqu'à des surfaces d'extrémité (23B) de chacun des rouleaux (23, 23', 23"), et une paire de parties de contact (73) qui est prévue dans la paire de bras (72), respectivement, et
dans laquelle au moins une partie de la paire de parties de contact (73) est configurée pour venir en contact avec un centre de rotation (O) du rouleau (23, 23', 23") sur la surface d'extrémité (23B) du rouleau (23, 23', 23") de façon à réguler le déplacement axial du rouleau (23, 23', 23") ; et
**caractérisée en ce que** le bras (72) comporte une première section (72A) fixée sur une surface périphérique extérieure du piston (22, 22') et s'étendant le long d'une direction axiale du rouleau (23, 23', 23") et une deuxième section (72B) reliée à la première section (72A) par l'intermédiaire d'une partie pliée et s'étendant dans une direction radiale du rouleau (23, 23', 23").

2. Machine hydraulique à pistons radiaux (20) selon la revendication 1,
dans laquelle la partie de contact (73) est une bille qui est prévue au niveau d'une partie d'extrémité du bras (72) et configurée pour venir en contact avec la surface d'extrémité (23B) du rouleau de telle sorte que le rouleau (23, 23', 23") peut rouler.

3. Machine hydraulique à pistons radiaux (20) selon la revendication 1,
dans laquelle une saillie (74) est prévue sur la surface d'extrémité (23B) du rouleau (23, 23', 23") pour venir en contact avec la partie de contact (73) qui est une partie d'extrémité (73) du bras (72).

4. Machine hydraulique à pistons radiaux (20) selon la revendication 1,
dans laquelle la partie de contact (73) est constituée par une saillie (74) prévue sur une partie d'extrémité (73) du bras (72) pour venir en contact avec la surface d'extrémité (23B) du rouleau (23, 23', 23").

5. Machine hydraulique à pistons radiaux (20) selon l'une quelconque des revendications 1 à 4, dans laquelle le rouleau (23, 23', 23") comprend une partie de réception (23D) disposée au niveau d'un centre de rotation (O) du rouleau (23, 23', 23") pour venir en contact avec la partie de contact (73), une surface d'extrémité (23B) sur laquelle la partie de réception (23D) est fixée, et un corps de rouleau (23A) ayant une surface périphérique extérieure venant en contact avec la came (29), la partie de réception (23D) étant composée d'une matière qui a une résistance de friction plus faible que la surface d'extrémité (23B).

6. Machine hydraulique à pistons radiaux (20) selon la revendication 1,
dans laquelle la première section (72A) est fixée par un boulon (75) sur la surface périphérique extérieure du piston (22, 22').

7. Machine hydraulique à pistons radiaux (20) selon l'une quelconque des revendications 1 à 6, dans laquelle le bloc-cylindres (26) comporte :
des chemises de cylindre (40) ayant les cylindres (24), respectivement ; et
un corps de bloc-cylindres (50) ayant des trous de chemise (52) dans lesquels les chemises de cylindre (40) sont insérées, respectivement, et
dans laquelle une encoche (41) est prévue dans chacune des chemises de cylindre (40) de façon à empêcher une interférence avec la partie de régulation de déplacement du rouleau (23, 23', 23") quand chacun des pistons (22, 22') se déplace en va-et-vient.

8. Machine hydraulique à pistons radiaux (20) selon l'une quelconque des revendications 1 à 7, dans laquelle chacun des pistons (22, 22') comporte un passage d'écoulement intérieur (80, 84, 96) et au moins une rainure d'huile (82, 86), le passage d'écoulement intérieur (80, 84, 96) étant configuré pour conduire de l'huile de fonctionnement depuis chacune des chambres hydrauliques (25) formées de manière respective par les pistons (22, 22') et les cylindres (24) jusqu'à chacune des surfaces d'engagement des pistons (22, 22') et des rouleaux (23, 23', 23"), la au moins une rainure d'huile (82, 86) étant formée pour communiquer avec le passage d'écoulement intérieur (80, 84, 96) et faire face à chacune desdites surfaces d'engagement.

9. Machine hydraulique à pistons radiaux (20) selon la revendication 6,
dans laquelle chacun des rouleaux (23, 23', 23") est disposé de telle sorte qu'un centre de rotation (O) de chacun desdits rouleaux (23, 23', 23") est positionné en aval par rapport à un axe central (L) de chacune des chemises de cylindre (40) dans une direction de rotation de la came (41).

10. Eolienne (1) comportant :
- au moins une pale (2) ;
- un moyeu (4) sur lequel la au moins une pale (2) est montée ;
- une pompe hydraulique (8) configurée pour être entraînée par la rotation du moyeu (4) ;
- un moteur hydraulique (10) configuré pour être entraîné par de l'huile sous pression générée par la pompe hydraulique (8) ; et
- une génératrice (16) configurée pour être entraînée par le moteur hydraulique (10),
dans laquelle au moins un de la pompe hydraulique (8) ou du moteur hydraulique (10) est constitué par la machine hydraulique à pistons radiaux (20) selon l'une quelconque des revendications 1 à 9.
